# EUROPEAN PATENT APPLICATION

(11) **EP 4 704 078 A1**
(43) Date of publication of application: **04.03.2026**
(21) Application number: 25197284.0
(22) Date of filing: 21.08.2025
(51) Int. Cl.: G10L 15/16, G06F 40/58, G10L 15/26, G06N 3/044

(54) **COMPUTER-IMPLEMENTED METHOD FOR TRANSCRIBING AND TRANSLATING SPEECH**

(30) Priority: 27.08.2024 US 202418816986
(71) Applicant: Microsoft Technology Licensing, LLC, Redmond, WA 98052 (US)
(72) Inventor: LI, Jinyu, Redmond, 98052 (US); WANG, Peidong, Redmond, 98052 (US); ZHAO, Rui, Redmond, 98052 (US); XUE, Jian, Redmond, 98052 (US); CHEN, Junkun, Redmond, 98052 (US)
(74) Representative: CMS Cameron McKenna Nabarro Olswang LLP

(57) **Abstract**

A computer-implemented method, computer program product and computing system for: receiving speech in a source language to define source language speech; performing a first token-based transcription of the source language speech into text of the source language using a first look-ahead encoder to define source language text; and performing a first token-based translation of the source language speech into text of a target language using a second look-ahead encoder to define target language text, wherein the first look-ahead encoder is smaller than the second look-ahead encoder.

## Description

### Technical Field

This disclosure relates to translation and transcribing systems and, more particularly, to token-based translation and transcribing systems.

### Background

The history of automated transcription and translation is a testament to the rapid advancements in technology, particularly in the realms of machine learning and artificial intelligence. The journey of automated transcription began in the 1950s and 1960s with early experiments in speech recognition by pioneers like Bell Labs and IBM, which created systems capable of recognizing spoken digits and a limited vocabulary of words. The 1970s saw the development of Hidden Markov Models (HMMs) at IBM and AT&T Bell Labs, laying the groundwork for many subsequent speech recognition systems. The 1980s introduced Dynamic Time Warping (DTW) techniques, which improved the accuracy and efficiency of these systems, exemplified by Carnegie Mellon University's "Harpy" system that could recognize over 1,000 words.

The 1990s marked a significant leap with the development of more sophisticated models that combined HMMs with neural networks. This era saw the emergence of continuous speech recognition systems like DragonDictate, which were commercially available and represented substantial progress. The 2000s brought major improvements due to advances in machine learning and the availability of large datasets, with companies like Nuance Communications developing software that significantly enhanced dictation and transcription usability. The advent of deep learning models, particularly Recurrent Neural Networks (RNNs) and Long Short-Term Memory networks (LSTMs), in the 2010s led to remarkable improvements in accuracy. Cloud-based transcription services like Google Cloud Speech-to-Text, IBM Watson, and Microsoft Azure Cognitive Services offered scalable solutions, and end-to-end deep learning models and Transformer-based architectures further pushed the boundaries of transcription accuracy.

Similarly, the history of automated translation began in the 1950s with the Georgetown-IBM experiment, which demonstrated the feasibility of machine translation (MT) using a small set of Russian-to-English sentences. Early MT efforts were dominated by rule-based systems that relied on extensive sets of linguistic rules and dictionaries. The 1970s saw a shift towards incorporating statistical methods, with SYSTRAN being one of the earliest and still-operating MT systems. The 1980s were marked by significant research in Europe and Japan, leading to advancements in MT projects like Eurotra and Mu, as well as the development of domain-specific systems.

The 1990s introduced Statistical Machine Translation (SMT), which relied on large bilingual text corpora to generate translations, with IBM's Candide project being particularly influential. The use of algorithms such as the Expectation-Maximization algorithm for training SMT models became widespread. The 2010s witnessed a revolutionary shift with the advent of Neural Machine Translation (NMT), exemplified by models like Google's GNMT and OpenNMT, which offered substantial improvements over SMT by using deep neural networks for end-to-end learning, enhancing fluency and contextual understanding in translations.

From 2016 onwards, the adoption of Transformer models, as introduced in the "Attention is All You Need" paper, greatly enhanced NMT performance. Major technology companies such as Google, Microsoft, and Amazon integrated advanced NMT into their translation services, and the development of large language models (LLMs) like OpenAI's GPT series further improved both transcription and translation tasks through better context understanding and language generation capabilities.

### Brief Description of the Drawings

FIG. 1 is a diagrammatic view of a transcription and translation process in accordance with various embodiments of the present disclosure;
FIG. 2 is a flow chart of one implementation of the transcription and translation process of FIG. 1 in accordance with various embodiments of the present disclosure;
FIGS. 3A-3G are diagrammatic views of an iterative translation process effectuated by the transcription and translation process of FIG. 1 in accordance with various embodiments of the present disclosure;
FIG. 4 is a flow chart of another implementation of the transcription and translation process of FIG. 1 in accordance with various embodiments of the present disclosure;
FIG. 5 is a diagrammatic view of the transcription and translation process of FIG. 1 configured to simultaneously transcribe into two languages; and
FIG. 6 is a diagrammatic view of a computer system and the transcription and translation process of FIG. 1 coupled to a distributed computing network in accordance with various embodiments of the present disclosure.

Like reference symbols in the various drawings indicate like elements.

### Detailed Description of the Preferred Embodiments

As will be discussed in greater detail below, implementations of the present disclosure can define a token-based translation and transcription system that enables smooth and fluid translations through the use of the continuous processing of smaller chunks of speech and the use of differently-sized look-ahead encoders.

Generally speaking, this disclosure concerns a system that receives source language speech and performs a first token-based translation of the same into text of an intermediate language. A second token-based translation is performed on this intermediate language text to define target language text. Through the use of such a system, efficiency may be enhanced, as the use of an intermediate language (e.g., English) greatly reduces the number of translation models required, while the use of a token-based translation methodology reduces lag and latency.

Generally speaking, this disclosure concerns a system that receives source language speech and performs a first token-based transcription of the same using a first look-ahead encoder to define source language text. A first token-based translation of the source language speech is performed using a second look-ahead encoder to define target language text, wherein the first look-ahead encoder is generally smaller than the second look-ahead encoder. Through the use of such a system, efficiency may be enhanced, as the second look-ahead encoder may examine a larger quantity of source language speech when performing a translation, while the first look-ahead encoder may examine a smaller quantity of source language speech when performing a transcription.

Transcription and translation, in the context of language, involve converting spoken or written content from one form to another. Transcription refers to the process of converting spoken words into written text. It involves listening to an audio recording or live speech and accurately capturing the words in written form. This process does not change the language; it simply transcribes the spoken words as they are. Translation, on the other hand, involves converting written text from one language to another. It requires not only a deep understanding of both the source and target languages but also the ability to convey the same meaning, tone, and context in the target language. While transcription focuses on accurately representing spoken language in written form within the same language, translation involves a cross-language conversion that maintains the original message's intent and nuances.

The details of one or more implementations are set forth in the accompanying drawings and the description below. Other features and advantages will become apparent from the description, the drawings, and the claims.

### Transcription and Translation Process:

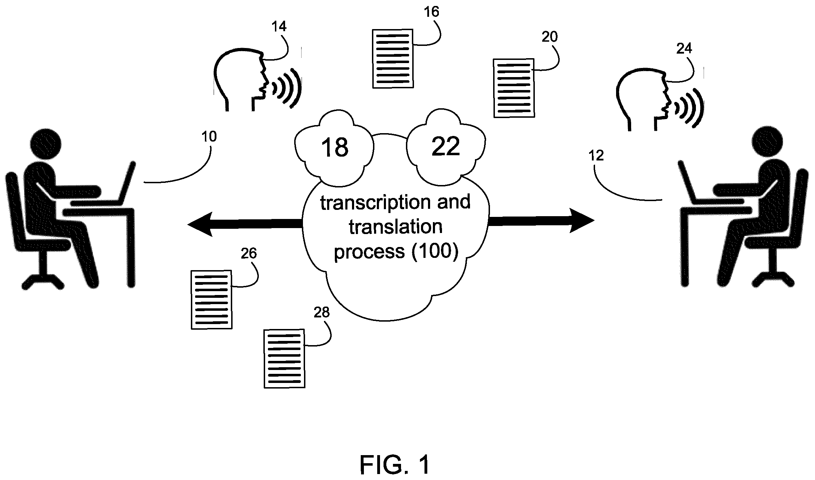

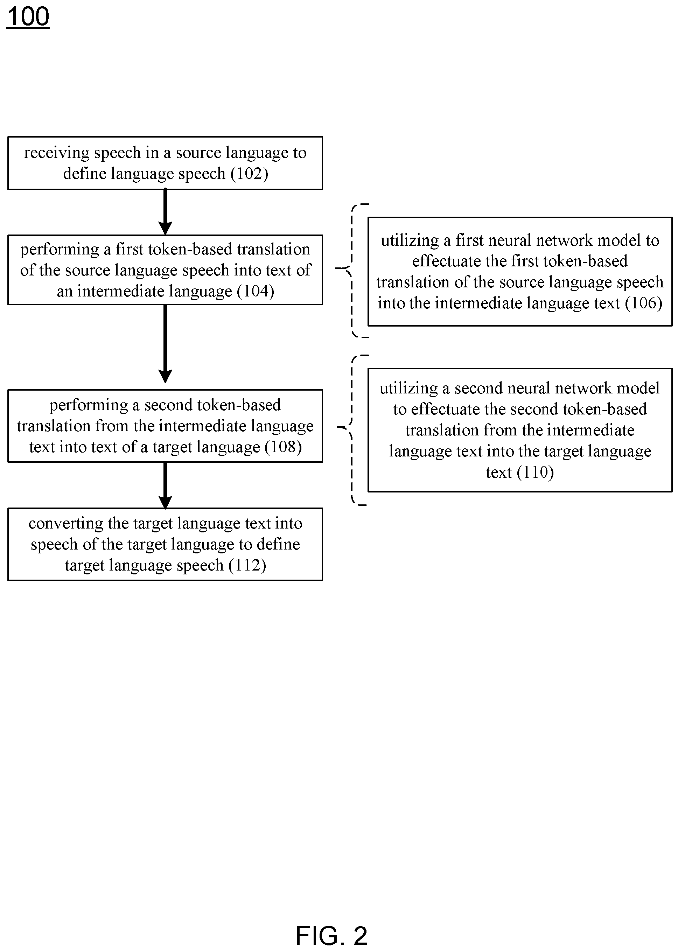

Referring to FIGS. 1-2, assume for this example that an international business video conference is occurring between a first office (e.g., first office 10) in Beijing China and a second office (e.g., second office 12) in Rio de Janeiro Brazil. Further assume for this example that the workers in the Beijing China office (e.g., first office 10) are fluent in Mandarin Chinese and the workers in the Rio de Janeiro Brazil office (e.g., second office 12) are fluent in Portuguese. In order for this international business video conference to be successful, the participants in the Beijing China office and the participants in the Rio de Janeiro Brazil office need to be able to communicate with each other. Accordingly, transcription and translation process 100 can be configured to effectuate such communication.

Accordingly, transcription and translation process 100 can receive 102 speech in a source language to define source language speech (e.g., source language speech 14). For this example, assume that the source language is Mandarin Chinese and, therefore, the source language speech (e.g., source language speech 14) is speech in the Mandarin Chinese language. Naturally, the manner in which transcription and translation process 100 is implemented can vary depending upon the manner in which the system is utilized. For example and in the Beijing China office (e.g., first office 10), the speech received by transcription and translation process 100 could be speech in the Mandarin Chinese language and, therefore, the source language speech (e.g., source language speech 14) could be speech in the Mandarin Chinese language. However and in the Rio de Janeiro Brazil office (e.g., second office 12), the speech received by transcription and translation process 100 could be speech in the Portuguese language and, therefore, the source language speech (e.g., source language speech 14) could be speech in the Portuguese language.

Once received 102, transcription and translation process 100 can perform 104 a first token-based translation of the source language speech (e.g., source language speech 14) into text of an intermediate language to define intermediate language text (e.g., intermediate language text 16). An example of such an intermediate language (i.e., the language of intermediate language text 16) can include but is not limited to the English language.

Token-based speech-to-text translation aims to convert spoken language into written text and translate it into another language by breaking down speech into smaller units, or tokens. The process typically begins with capturing audio input (such as spoken Mandarin Chinese), which is transformed into a digital signal and could undergo feature extraction to represent the speech in a machine-readable format, often using features like Mel-Frequency Cepstral Coefficients (MFCCs). MFCCs are particularly effective as they capture the power spectrum of the audio signal, providing a detailed representation of the speech sounds. An alternative to MFCCs can be the use of features based on Discrete Wavelet Transform

The extracted features could then be processed by a speech recognition model, which might use neural networks such as Recurrent Neural Networks (RNNs), Long Short-Term Memory networks (LSTMs), or Transformer architectures to decode the speech into a sequence of phonemes, words, or sub-word units (tokens). RNNs and LSTMs have been widely used due to their ability to handle sequential data, but more recently, Transformer models have gained prominence because of their efficiency and accuracy in processing longer contexts through mechanisms like self-attention. A language model might then refine this sequence to ensure coherence and grammatical correctness. This step could involve correcting potential errors from the transcription phase and ensuring that the text makes sense within the context of the language. The language model could help in maintaining the syntactic and semantic integrity of the transcribed text. Once transcribed, the text tokens could be fed into a machine translation model, possibly a Transformer-based architecture. Transformer models generally excel at understanding context and generating corresponding sequences of tokens in the target language. They use self-attention mechanisms to weigh the importance of different tokens in the input sequence, allowing them to capture nuanced meanings and relationships between words. This capability is essential for translating phrases and sentences accurately, considering the complexities of grammar, syntax, and idiomatic expressions in different languages.

The translated tokens might then be detokenized, converting them back into coherent text strings in the target language (e.g., English). Detokenization could involve combining tokens according to the rules of the target language to form complete, grammatically correct sentences. Following this, additional processing steps could be applied to ensure the translated text is fluent and natural.

When performing 104 a first token-based translation of the source language speech (e.g., source language speech 14) into text of an intermediate language (e.g., intermediate language text 16), transcription and translation process 100 may utilize 106 a first neural network model (e.g., first neural network model 18) to effectuate the first token-based translation of the source language speech (e.g., source language speech 14) into text of an intermediate language (e.g., intermediate language text 16).

**In** this context, neural networks could convert text from one language to another by learning patterns and structures from large amounts of bilingual text data. Different types of neural networks could be employed, including Recurrent Neural Networks (RNNs), Long Short-Term Memory Networks (LSTMs), and Transformer models. RNNs could be well-suited for sequential data like language because they maintain a "memory" of previous inputs, helping them understand context. LSTMs could improve upon RNNs by overcoming their limitations in learning long-term dependencies, making them more effective for translating longer sentences. Transformer models, which represent the state-of-the-art, could use a mechanism called self-attention to process entire sentences or paragraphs simultaneously, capturing global context more effectively. The translation process could typically involve training the neural network on large parallel corpora, which consist of sentences in one language and their corresponding translations in another. During training, the network could learn to map input sequences to output sequences by adjusting its weights to minimize errors. The process could be divided into two main parts: encoding and decoding. The encoder could read the input sentence and could convert it into a context vector that encapsulates its meaning, while the decoder could generate the corresponding sentence in the target language. The attention mechanism, especially self-attention in transformers, could allow the model to focus on different parts of the input sentence when translating each word, improving accuracy. Neural networks could be used in various applications, such as machine translation systems like Google Translate and Microsoft Translator, language learning tools like Duolingo, and assistive technologies for individuals with hearing or speech impairments. These models could offer advantages like improved contextual understanding, scalability, and real-time processing capabilities. However, they could also face challenges such as the need for large amounts of bilingual data, significant computational resources, and difficulties in handling ambiguities and nuances in language.

An example of the first neural network model (e.g., first neural network model 18) could include but is not limited to a Recurrent Neural Network Transducer (RNN-T) model.

A Recurrent Neural Network Transducer (RNN-T) model is a robust solution for sequence-to-sequence tasks, such as speech recognition and translation, due to its architecture, which effectively handles the complexities inherent in processing sequential data. The RNN-T model could be composed of three main components: the encoder, the decoder, and the joint network.

The **encoder** could process the input audio sequence, converting it into a higher-level representation. This could be achieved through several layers of recurrent neural networks (RNNs), such as Long Short-Term Memory (LSTM) or Gated Recurrent Unit (GRU) networks. The encoder could be designed to capture the temporal dependencies and intricate features in the speech signal, producing a sequence of high-level representations that encapsulate the essential information needed for accurate translation.

The **decoder** could process previously predicted token sequence in the target language, also converting it into a higher-level representation for the history. The decoder could utilize RNNs, enabling it to manage the sequential nature of the translation process.

The **joint network,** or prediction network, could combine the outputs from the encoder and decoder to predict the next token in the output sequence. This network could consist of a simple feedforward neural network that merges the encoded features with the decoder's state, outputting a probability distribution over possible next symbols. This step could be crucial for determining both the alignment (when to output a new token) and the actual token itself.

In the context of speech translation, the process begins with the input audio waveform being split into frames, which are then fed into the encoder. The encoder processes these frames sequentially, generating a sequence of high-level representations. The decoder then starts generating a representation of previously predicted token sequence starting with "blank" token. The joint network merges the outputs from the encoder and decoder to produce a probability distribution over the next possible tokens, determining both the alignment and the token itself. This process continues iteratively until an end-of-sequence token is predicted, resulting in the final translated text sequence. RNN-T models offer several advantages for speech translation. One significant advantage is the ability to be trained end-to-end, optimizing all components (encoder, decoder, and joint network) simultaneously. This holistic approach could result in better performance compared to models that are trained in separate stages, as it allows the model to learn more effectively from the data. Additionally, RNN-T models inherently handle alignment within their architecture, eliminating the need for explicit alignment methods. This inherent alignment capability makes the RNN-T model more flexible and robust to variations in speaking rates and accents, which are common challenges in speech translation. Another key advantage of the RNN-T model is its streaming capability. This makes RNN-T particularly suitable for online or real-time applications, as it can process the input incrementally and generate output tokens as soon as enough information is available. This feature could be essential for applications requiring real-time speech translation, such as live translation services or assistive technologies for the hearing impaired. However, the use of RNN-T models also presents some challenges. Training and inference can be computationally intensive due to the recurrent nature of both the encoder and decoder. The sequential processing required by RNNs can lead to longer training times and higher computational resource requirements. Moreover, high-quality, large-scale datasets are necessary to train RNN-T models effectively. Speech translation involves both acoustic and linguistic complexities, and adequate data is essential to capture these nuances accurately. Despite these challenges, the RNN-T model remains a powerful tool for speech translation. By leveraging the strengths of recurrent neural networks, the RNN-T model effectively handles the sequential nature of both speech and text, making it a promising solution for translating spoken language with high accuracy and efficiency.

As will be discussed below, the first token-based translation could utilize time-based tokens to translate the source language speech (e.g., source language speech 14) into the intermediate language text (e.g., intermediate language text 16). A typical example of such a time-based token could be a 10 millisecond portion of speech, wherein the inbound streaming speech (e.g., source language speech 14) is broken up into 10 millisecond chunks and processed, so that e.g., a 200 millisecond portion of streaming speech (e.g., source language speech 14) could be broken up into twenty 10 millisecond chunks of speech that are processed by transcription and translation process 100.

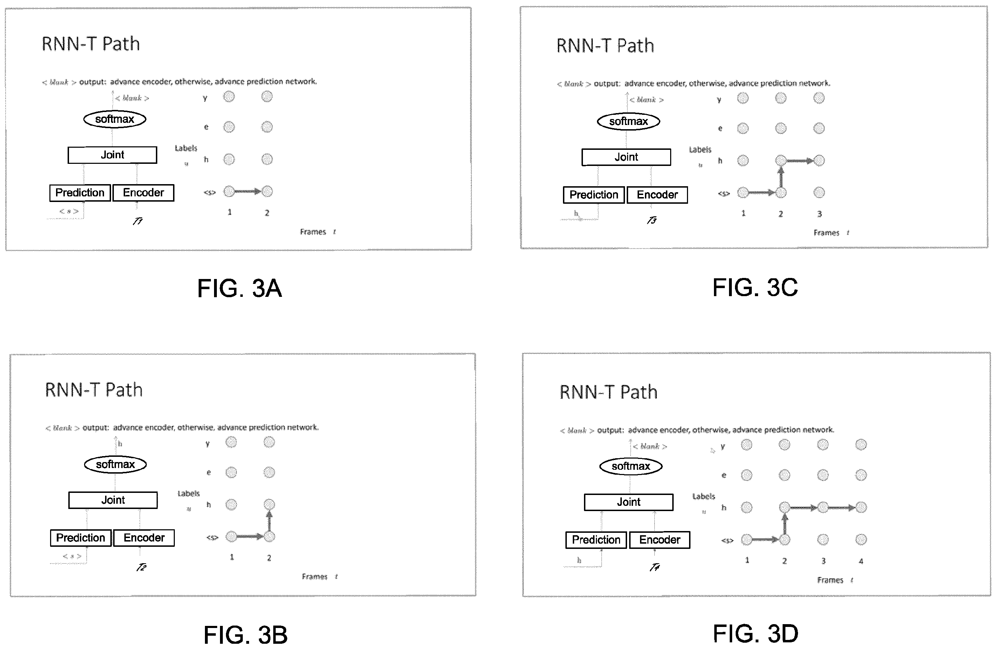

For illustrative purposes and referring also to FIGS. 3A-3G, assume that transcription and translation process 100 is performing 104 a first token-based translation of source language speech 14 (e.g., Mandarin Chinese speech) into intermediate language text 16 (e.g., English text). Further, assume that the user in the Beijing China office (e.g., first office 10) is speaking Mandarin Chinese, and the portion being spoken is translatable to the English text "Hey". Accordingly, transcription and translation process 100 could receive this Mandarin Chinese speech in a tokenized fashion (e.g., in 10 millisecond chunks) and could process these tokens utilizing (in this example) the Recurrent Neural Network Transducer (RNN-T) model discussed above.

Accordingly and referring to FIG. 3A, assume that a first token (T1) is received on the encoder input of the RNN-T model. However, this first token (T1) received is either silence or too short or fragmented to provide the RNN-T model with any discernable information concerning the translation being performed. Accordingly, the RNN-T model could output a "blank" in response to this first token (T1), which could indicate such a lack of information. This "blank" response could then be fed back to the prediction input of the RNN-T model.

Now referring to FIG. 3B, assume that a second token (T2) is received on the encoder input of the RNN-T model. This second token (T2) does provide the RNN-T model with discernable information concerning the translation being performed. Accordingly, the RNN-T model could output an "H" in response to this second token (T2), which could indicate that the portion of Mandarin Chinese being spoken translates to an "H" in English. This "H" response could then be fed back to the prediction input of the RNN-T model.

Now referring to FIG. 3C, assume that a third token (T3) is received on the encoder input of the RNN-T model. However, this third token (T3) received is either silence or too short or fragmented to provide the RNN-T model with any discernable information concerning the translation being performed. Accordingly, the RNN-T model could output a "blank" in response to this third token (T3), which could indicate this lack of discernable information concerning the subject token. This "blank" response could then be fed back to the prediction input of the RNN-T model.

Now referring to FIG. 3D, assume that a fourth token (T4) is received on the encoder input of the RNN-T model. However, this fourth token (T4) received is either silence or too short or fragmented to provide the RNN-T model with any discernable information concerning the translation being performed. Accordingly, the RNN-T model could output a "blank" in response to this fourth token (T4), which could indicate this lack of discernable information concerning the subject token. This "blank" response could then be fed back to the prediction input of the RNN-T model.

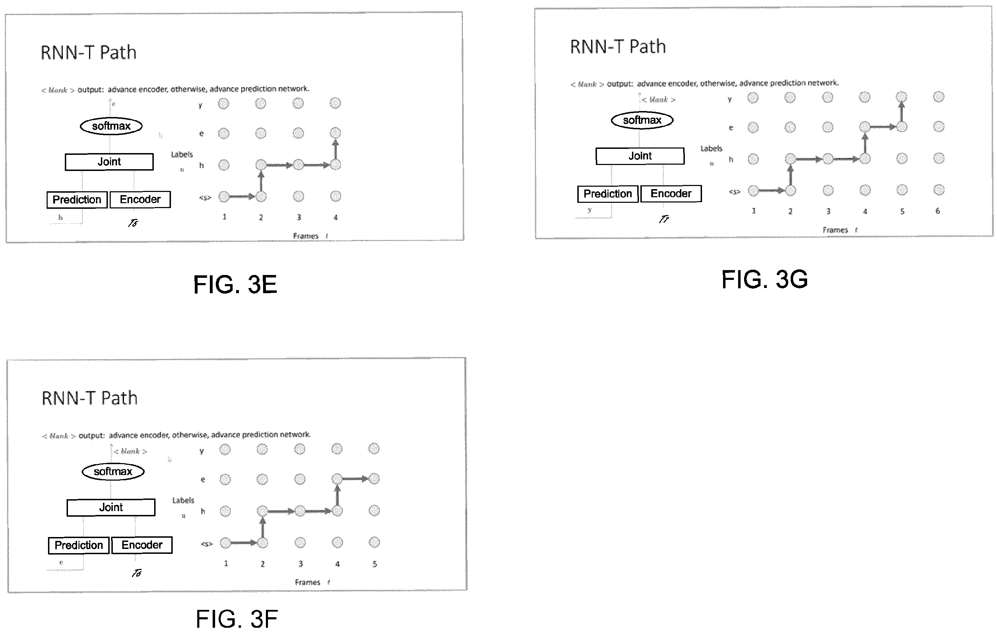

Now referring to FIG. 3E, assume that a fifth token (T5) is received on the encoder input of the RNN-T model. This fifth token (T5) does provide the RNN-T model with discernable information concerning the translation being performed. Accordingly, the RNN-T model could output an "E" in response to this fifth token (T5), which could indicate that the portion of Mandarin Chinese being spoken translates to an "E" in English. This "E" response could then be fed back to the prediction input of the RNN-T model.

Now referring to FIG. 3F, assume that a sixth token (T6) is received on the encoder input of the RNN-T model. However, this sixth token (T6) received is either silence or too short or fragmented to provide the RNN-T model with any discernable information concerning the translation being performed. Accordingly, the RNN-T model could output a "blank" in response to this sixth token (T6), which could indicate this lack of discernable information concerning the subject token. This "blank" response could then be fed back to the prediction input of the RNN-T model.

Now referring to FIG. 3G, assume that a seventh token (T7) is received on the encoder input of the RNN-T model. This seventh token (T7) does provide the RNN-T model with discernable information concerning the translation being performed. Accordingly, the RNN-T model could output a "Y" in response to this seventh token (T7), which could indicate that the portion of Mandarin Chinese being spoken translates to a "Y" in English. This "Y" response could then be fed back to the prediction input of the RNN-T model.

Transcription and translation process 100 could continue this iterative token-based translation process until the source language speech 14 (e.g., Mandarin Chinese speech) has been fully processed into the intermediate language text 16 (e.g., English text).

Continuing with the above-stated example, transcription and translation process 100 could perform 108 a second token-based translation from the intermediate language text (e.g., intermediate language text 16) into text of a target language to define target language text (e.g., target language text 20). Specifically, the output of the first token-based translation from source language speech 14 into intermediate language text 16 could be immediately feed into (i.e., used as an input for) the second token-based translation from intermediate language text 16 into target language text 20.

Token-based text-to-text translation is a sophisticated process that efficiently manages the complexities of language translation by breaking down texts into smaller, manageable units known as tokens. These tokens, which could represent individual letters, words, subwords (parts of words), or even phrases, are the basic elements that translation models work with to understand and convert content from one language to another. The process begins with tokenization, where the original text is dissected into tokens using specific algorithms. This step could be crucial as it helps the translation model to focus on smaller units of meaning, which is particularly beneficial for languages with rich morphology or those that use compound words. By breaking words down to subwords, the model could handle new words or rare words more effectively, since it could translate parts of words based on common patterns it has learned during training.

Once the text is tokenized, these tokens could be input into a machine learning model, typically a neural network like the Transformer model. The Transformer architecture could be particularly suited for this task due to its self-attention mechanism, which allows it to evaluate the importance of each token in relation to every other token in a sentence. This feature could enable the model to capture the context surrounding each word, ensuring that the translation maintains the correct meaning, tone, and stylistic nuances. During translation, the model could consider each token within the larger context of the sentence or even the entire text. This context-aware processing could be for accurately translating idiomatic expressions and handling complex syntactic structures, which could be interpreted differently depending on their surrounding words. For instance, the English word "bank" can mean different things based on its context (e.g., river bank vs. financial bank), and token-based translation helps in distinguishing these meanings accurately by looking at neighboring tokens.

After the tokens are processed and translated into the target language, they are reassembled into complete sentences. This reassembly could maintain the grammatical and stylistic integrity of the original text, adapting it as needed to fit the linguistic conventions of the target language. Post-processing steps could be required to adjust grammar, punctuation, and fluency, ensuring that the final text reads naturally to native speakers.

When performing 108 a second token-based translation from the intermediate language text (e.g., intermediate language text 16) into text of a target language (e.g., target language text 20), transcription and translation process 100 may utilize 110 a second neural network model (e.g., second neural network model 22) to effectuate the second token-based translation from the intermediate language text (e.g., intermediate language text 16) into text of a target language (e.g., target language text 20). In this particular example, the target language my be Portuguese for the participants in the second office (e.g., second office 12) in Rio de Janeiro Brazil.

Accordingly, an example of the second neural network model (e.g., second neural network model 22) could include but is not limited to a Recurrent Neural Network Transducer (RNN-T) model.

As discussed above, a Recurrent Neural Network Transducer (RNN-T) model is a robust solution for sequence-to-sequence tasks, such as speech recognition and translation, due to its architecture, which effectively handles the complexities inherent in processing sequential data, wherein the RNN-T model could be composed of three main components: the encoder, the decoder, and the joint network.

The second token-based translation could utilize content-based tokens to translate the intermediate language text (e.g., intermediate language text 16) into the target language text (e.g., target language text 20). As discussed above, these content-based tokens, which could represent individual letters, words, subwords (parts of words), or even phrases could be sequentially processed by transcription and translation process 100 to translate the intermediate language text (e.g., intermediate language text 16) into the target language text (e.g., target language text 20)

As discussed above and when performing the first token-based translation from source language speech 14 into intermediate language text 16, the output of the first token-based translation could be an "H"...followed by an "E"...followed by a "Y. These three characters (i.e., "H", "E", "Y") are intermediate language text 16. Transcription and translation process 100 could tokenize intermediate language text 16 into three content-based tokens (i.e., one token for "H", one token for "E", one token for "Y"), which could be fed into (i.e., used as an input for) the second token-based translation so that these tokens could be converted into target language text 20 (e.g., Portuguese text). In this example, the Portuguese translation of the English text "Hey" (i.e., intermediate language text 16) is the Portuguese text "Ei" (i.e., target language text 20).

Additionally, transcription and translation process 100 could convert 112 the target language text (i.e., target language text 20) into speech of the target language to define target language speech (i.e., target language speech 24). Accordingly the Portuguese text (i.e., target language text 20) could be converted to Portuguese speech (i.e., target language speech 24), thus allowing the participants in the second office (e.g., second office 12) in Rio de Janeiro Brazil to listen in their native language to what the participants in the first office (e.g., first office 10) in Beijing China are saying in their native language.

To convert text to speech, a process facilitated by Text-to-Speech (TTS) technology begins with pre-processing where the text could be corrected for any grammatical errors and standardized in terms of spelling and punctuation. This could ensure that the input text is optimized for subsequent processing. After pre-processing, the system could undertake a detailed analysis of the text to outline its structural elements, such as sentence boundaries and punctuation. This analysis could extend into parsing the text into phonetic or prosodic units that identify intonation, stress, and rhythm, which are crucial for rendering realistic spoken language. Following the structural analysis, the text could undergo tokenization where it's broken down into smaller segments like words and phrases. Each segment is tagged with its part of speech, helping the system understand the grammatical context and thus how to pronounce words correctly depending on their usage. Text normalization could be another critical step, transforming textual representations of numbers, dates, and abbreviations into spoken word equivalents, making the speech sound natural and comprehensible. Phonetic transcription could be performed next, converting each word into phonetic codes, wherein these codes instruct the TTS engine on the articulation of words, ensuring proper pronunciation. Prosody prediction could follow, which is about crafting the rhythm, melody, and pacing of speech. This could involve determining where to place emphasis, how to adjust tone, and when to pause, all essential for the speech to sound fluid and natural. Finally, the last stage is speech synthesis, where the processed text is converted into audible speech. These samples could be stitched together to form complete utterances that sound smooth and natural.

By utilizing English (or any other language) as an intermediate language, the quantity of models that transcription and translation process 100 needs to train or maintain is greatly reduced. For example, assume that transcription and translation process 100 is designed to translate between 100 languages. That means that 99 models are needed for each discrete language. For example, a model would be needed to translate English into any of the other 99 languages. That would mean that each of the 100 languages would need 99 models to convert that language to any of the other 99 languages. Accordingly and for a system that is capable of translating into any of 100 languages, a total of 9900 models would need to be maintained or trained by transcription and translation process 100. However, if a language (e.g., English) is used as an intermediate language, a first group of 99 models would be needed to translate the other 99 languages into English and a second group of 99 models would be needed to translate the intermediate English text into the other 99 languages; thus requiring a grand total of 198 models to be maintained and trained by transcription and translation process 100.

Using a common intermediate language in translation processes can offer several significant advantages. This approach simplifies the translation pipeline, as each language only needs to be translated to and from the intermediate language, reducing the need for numerous direct translation models between every possible language pair. This not only conserves computational resources but also ensures consistency and quality across translations, as the intermediate language helps preserve nuances and meanings more accurately. Resource efficiency is another benefit, particularly for less commonly spoken languages, as it allows the development of high-quality models without requiring extensive data for direct translations to many other languages. Additionally, using an intermediate language improves flexibility and scalability, making it easier to add new languages to the system since only translations to and from the intermediate language are needed. This method also enhances the handling of multilingual contexts, providing a unified framework for complex linguistic scenarios. Overall, employing a common intermediate language simplifies maintenance and updates, ensuring that improvements in the intermediate language models benefit all connected languages, leading to more reliable and high-quality translations.

As will be discussed below in greater detail, transcription and translation process 100 could be configured to simultaneously transcribe speech from a first language into text in the first language and text in a target language.

Again, assume for this example that an international business video conference is occurring between a first office (e.g., first office 10) in Beijing China and a second office (e.g., second office 12) in Rio de Janeiro Brazil, wherein the workers in the Beijing China office (e.g., first office 10) are fluent in Mandarin Chinese and the workers in the Rio de Janeiro Brazil office (e.g., second office 12) are fluent in Portuguese. Further, assume that the participants in the Beijing China office would like to have this meeting transcribed into two languages: a) their native language of Mandarin Chinese and b) English for their colleagues in Boston, Massachusetts, USA. Accordingly, transcription and translation process 100 could be configured to effectuate such transcription.

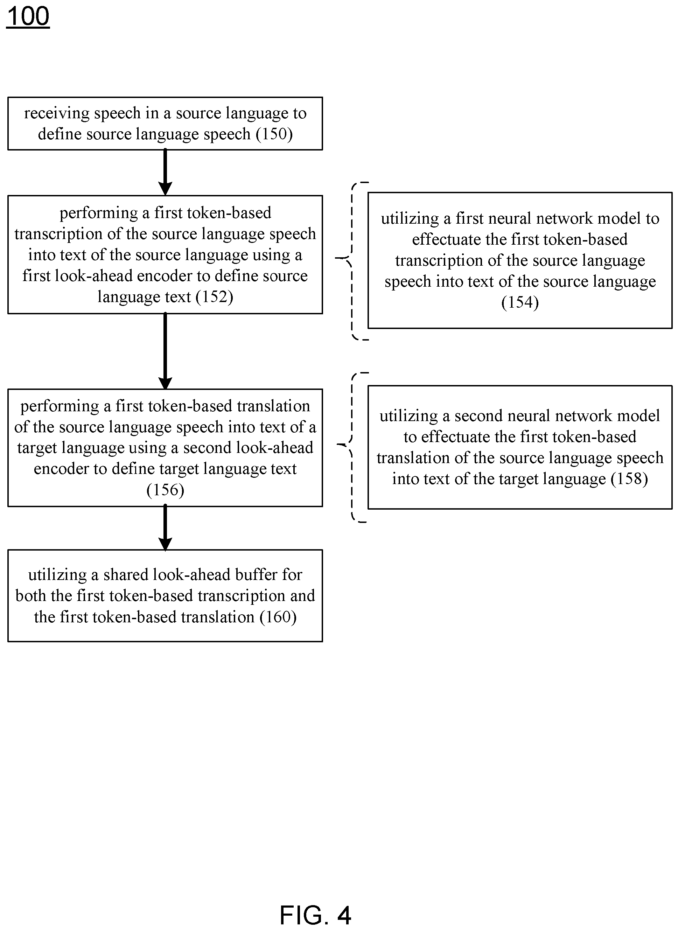

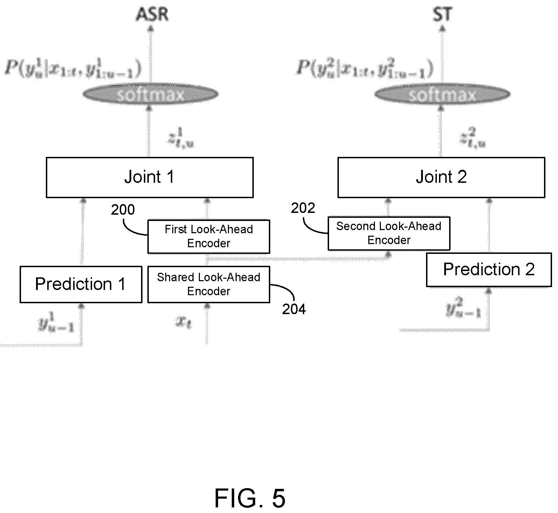

Referring also to FIGS 4-5, transcription and translation process 100 could receive 150 speech in a source language to define source language speech (e.g., source language speech 14). For this example, assume that the source language is Mandarin Chinese and, therefore, the source language speech (e.g., source language speech 14) is speech in the Mandarin Chinese language. Naturally, the manner in which transcription and translation process 100 is implemented could vary depending upon the manner in which the system is utilized. For example and in the Beijing China office (e.g., first office 10), the speech received by transcription and translation process 100 could be speech in the Mandarin Chinese language and, therefore, the source language speech (e.g., source language speech 14) could be speech in the Mandarin Chinese language. However and in the Rio de Janeiro Brazil office (e.g., second office 12), the speech received by transcription and translation process 100 could be speech in the Portuguese language and, therefore, the source language speech (e.g., source language speech 14) could be speech in the Portuguese language.

Transcription and translation process 100 could perform 152 a first token-based transcription of the source language speech (e.g., source language speech 14) into text of the source language using a first look-ahead encoder (e.g., first look-ahead encoder 200) to define source language text (e.g., source language text 26). As will be discussed below and in one implementation, the first look ahead encoder (e.g., first look-ahead encoder 200) concerns the quantity of the source language text (e.g., source language text 26) being examined when transcription and translation process 100 is processing the same, wherein a "larger" look ahead encoder may process a larger quantity of the source language text (e.g., source language text 26). For example, the first look ahead encoder (e.g., first look-ahead encoder 200) may concern a smaller quantity (e.g., 100 milliseconds) of the source language text (e.g., source language text 26), while a "larger" look ahead encoder may concern a larger quantity (e.g., 750 milliseconds) of the source language text (e.g., source language text 26).

Similar to token-based translation described above, token-based transcription involves converting spoken language into written text by breaking down the audio input into smaller, manageable units called tokens. This process could start with capturing the audio and converting it into a digital format, which is then analyzed to identify distinct features such as phonemes, syllables, or words. These features could be segmented into tokens, which represent the smallest meaningful units of speech. Advanced models, often based on neural network architectures like Recurrent Neural Networks (RNNs) or Transformers, process these tokens to transcribe the audio accurately. By handling each token individually and in context with surrounding tokens, the system can better manage variations in speech, accents, and intonation, ensuring a more precise transcription. This method could allow for detailed and nuanced text generation, as the model learns to predict and correct based on the sequence of tokens. Token-based transcription could be particularly effective in applications where high accuracy is crucial, such as in automatic captioning, voice-to-text applications, and transcription services, offering a reliable way to convert spoken words into written form.

In the context of translation and transcription, a look-ahead encoder (e.g., first look-ahead encoder 200) could play a critical role in neural network architectures, especially those involved in sequence-to-sequence tasks like machine translation or automated transcription. This type of encoder analyzes not only the current segment of text but also incorporates a view of upcoming segments before generating an output. By examining subsequent tokens or phrases, the look-ahead encoder could better understand the context and nuances of a sentence or speech segment, leading to more accurate translations or transcriptions. This approach is particularly useful in handling languages with flexible word orders or where the meaning of words depends heavily on subsequent context. For instance, in translation, anticipating future words can clarify whether a word should be translated with a particular tense, gender, or case. Similarly, in transcription, knowing subsequent words can help disambiguate words that sound alike but have different meanings based on their context. Thus, look-ahead encoders enhance the model's ability to produce coherent and contextually appropriate outputs by integrating advanced predictions into the processing of current data.

As the above-described first token-based transcription operation does not involve any translation (i.e., it goes from source language speech to source language text), a first look-ahead encoder (e.g., first look-ahead encoder 200) could be utilized, since the transcription is simpler when the context of the tokens could be considered less. Accordingly and in such an implementation, the first look-ahead encoder (e.g., first look-ahead encoder 200) may only need to examine a smaller quantity (e.g., 100 milliseconds) of source language speech when converting the same into source language text.

When performing 152 the first token-based transcription of the source language speech (e.g., source language speech 14) into text of the source language (e.g., source language text 26) using a first look-ahead encoder (e.g., first look-ahead encoder 200), transcription and translation process 100 may: utilize 154 a first neural network model (e.g., first neural network model 18) to effectuate the first token-based transcription of the source language speech (e.g., source language speech 14) into text of the source language (e.g., source language text 26).

A neural network (e.g., first neural network model 18) with respect to language transcription refers to an advanced computational model designed to convert spoken language into written text. These networks, often based on architectures like Recurrent Neural Networks (RNNs), Long Short-Term Memory networks (LSTMs), or Transformers, could be trained to understand and process the nuances of human speech. In this process, the neural network could take audio input, process it to recognize phonetic and linguistic patterns, and then transcribe it into readable text. The network's layers could work by capturing temporal dependencies in speech, allowing it to consider the context and sequence of words, which is essential for accurate transcription. This technology could be particularly powerful because it can handle various accents, speech speeds, and background noises, improving the quality and reliability of transcriptions.

An example of the second neural network model (e.g., second neural network model 22) could include but is not limited to a Recurrent Neural Network Transducer (RNN-T) model.

The above-described first token-based transcription could utilize time-based tokens to translate the source language speech (e.g., source language speech 14) into text of the source language (e.g., source language text 26). As discussed above, a typical example of such a time-based token could be a 10 millisecond portion of speech (e.g., source language speech 14), wherein the inbound streaming speech (e.g., source language speech 14) is broken up into 10 millisecond chunks and processed, so that e.g., a 200 millisecond portion of streaming speech (e.g., source language speech 14) could be broken up into twenty 10 millisecond chunks of speech that are processed by transcription and translation process 100.

Transcription and translation process 100 could perform 156 a first token-based translation of the source language speech (e.g., source language speech 14) into text of a target language using a second look-ahead encoder (e.g., second look-ahead encoder 202) to define target language text (e.g., target language text 28). An example of the target language could include but is not limited to English. Accordingly and in such an implementation, the second look-ahead encoder (e.g., second look-ahead encoder 202) may need to examine a larger quantity (e.g., 750 milliseconds) of source language speech when converting the same into the target language text (e.g., target language text 28). Therefore, first look-ahead encoder 200 (e.g., at 100 milliseconds) may be smaller than second look-ahead encoder 202 (e.g., at 750 milliseconds).

Token-based speech-to-text translation aims to convert spoken language into written text and translate it into another language by breaking down speech into smaller units, or tokens. The process typically begins with capturing audio input (such as spoken Mandarin Chinese), which is transformed into a digital signal and could undergo feature extraction to represent the speech in a machine-readable format. Once these tokens are transcribed (e.g., in the manner described above that concerned the characters "H", "E" and "Y"), these tokens could be translated and detokenized, converting them into coherent text strings in the target language (e.g., English). Detokenization could involve combining tokens according to the rules of the target language to form complete, grammatically correct sentences.

When performing 156 the first token-based translation of the source language speech (e.g., source language speech 14) into text of a target language (e.g., target language text 28) using a second look-ahead encoder (e.g., second look-ahead encoder 202), transcription and translation process 100 may: utilize 158 a second neural network model (e.g., second neural network model 22) to effectuate the first token-based translation of the source language speech (e.g., source language speech 14) into text of the target language (e.g., target language text 28).

The above-described second token-based transcription could utilize time-based tokens to translate the source language speech (e.g., source language speech 14) into text of the target language (e.g., target language text 28). As discussed above, a typical example of such a time-based token could be a 10 millisecond portion of speech (e.g., source language speech 14), wherein the inbound streaming speech (e.g., source language speech 14) is broken up into 10 millisecond chunks and processed, so that e.g., a 200 millisecond portion of streaming speech (e.g., source language speech 14) could be broken up into twenty 10 millisecond chunks of speech that are processed by transcription and translation process 100.

As stated above, when a transcription operation does not involve any translation (i.e., it goes from source language speech to source language text), a first look-ahead encoder (e.g., first look-ahead encoder 200) could be utilized, since the transcription is simpler when the context of the tokens could be considered less. However, when a transcription operation does involve a translation (i.e., it goes from source language speech to target language text), a second look-ahead encoder (e.g., second look-ahead encoder 202) could be utilized, since the translation is more complex when the context of the tokens should be considered more.

Generally speaking, utilizing a larger look-ahead encoder (e.g., second look-ahead encoder 202) when performing the second token-based translation of the source language speech (e.g., source language speech 14) into text of the target language (e.g., target language text 28) could enable the gathering of more context concerning the use and meaning of the source language speech (e.g., source language speech 14), thus enabling a higher quality translation.

When translating text, using a larger look-ahead encoder can significantly enhance the accuracy and fluency of the translation. This is because translation often requires understanding a broader context to accurately convey the meaning, tone, and nuances of the original text in the target language. By looking ahead at a larger segment of text, the encoder can better grasp the overall structure and flow of sentences, anticipate upcoming content, and make more informed decisions about word choices and grammatical structures. This larger context is particularly crucial for handling idiomatic expressions, resolving ambiguities, and maintaining coherence across longer passages, which are common challenges in translation.

**In** contrast, when transcribing spoken language into text, a smaller look-ahead encoder (e.g., first look-ahead encoder 200) is typically sufficient. Transcription focuses on converting speech to text in a manner that captures the spoken words accurately and promptly. Since spoken language is usually processed in real-time or near-real-time, the immediate context is often enough to determine the correct transcription. A smaller look-ahead window allows the system to transcribe words and phrases quickly, which is important for applications like live captioning or voice assistants. Additionally, speech tends to be more linear and less complex in structure compared to written text, reducing the need for extensive context to maintain accuracy.

Therefore, while a larger look-ahead encoder enhances the ability to capture context and nuance in translation, a smaller look-ahead encoder balances the need for speed and accuracy in transcription, making it more suitable for real-time or near-real-time applications where immediate output is critical.

In addition to the above-described first look-ahead encoder 200 and second look-ahead encoder 202, transcription and translation process 100 could utilize 160 a shared look-ahead encoder (e.g., shared look-ahead encoder 204) for servicing both the first token-based transcription operation and the second token-based translation operation described above. This shared look-ahead encoder (e.g., shared look-ahead encoder 204) may function is a fashion similar to first look-ahead encoder 200 and second look-ahead encoder 202 and may provide an additional quantity (e.g., 100 milliseconds) of the source language text (e.g., source language text 26).

### System Overview:

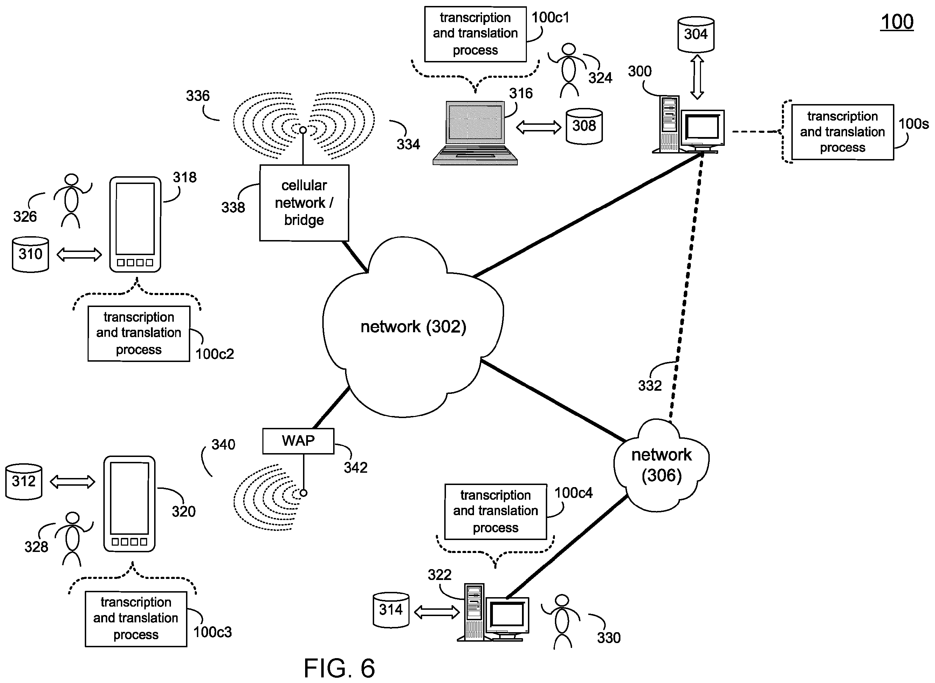

Referring to FIG. 6, there is shown transcription and translation process 100. Transcription and translation process 100 could be implemented as a server-side process, a client-side process, or a hybrid server-side / client-side process. For example, transcription and translation process 100 could be implemented as a purely server-side process via transcription and translation process 100s. Alternatively, transcription and translation process 100 could be implemented as a purely client-side process via one or more of transcription and translation process 100c1, transcription and translation process 100c2, transcription and translation process 100c3, and transcription and translation process 100c4. Alternatively still, transcription and translation process 100 could be implemented as a hybrid server-side and client-side process via transcription and translation process 100s in combination with one or more of transcription and translation process 100c1, transcription and translation process 100c2, transcription and translation process 100c3, and transcription and translation process 100c4.

Accordingly, transcription and translation process 100 as used in this disclosure could include any combination of transcription and translation process 100s, transcription and translation process 100c1, transcription and translation process 100c2, transcription and translation process 100c3, and transcription and translation process 100c4.

Transcription and translation process 100s could be a server application and could reside on and could be executed by computing device 300, which could be connected to network 302 (e.g., the Internet or a local area network). Examples of computing device 300 could include, but are not limited to: a personal computer, a server computer, a series of server computers, a mini computer, a mainframe computer, a smartphone, or a cloud-based computing platform.

The instruction sets and subroutines of transcription and translation process 100s, which could be stored on storage device 304 coupled to computing device 300, could be executed by one or more processors (not shown) and one or more memory architectures (not shown) included within computing device 300. Examples of storage device 304 could include but are not limited to: a hard disk drive; a RAID device; a random-access memory (RAM); a read-only memory (ROM); and all forms of flash memory storage devices.

Network 302 could be connected to one or more secondary networks (e.g., network 306), examples of which could include but are not limited to: a local area network; a wide area network; or an intranet, for example.

Examples of transcription and translation processes 100c1, 100c2, 100c3, 100c4 could include but are not limited to a web browser, a game console user interface, a mobile device user interface, or a specialized application (e.g., an application running on e.g., the Android platform, the iOS platform, the Windows platform, the Linux platform or the UNIX platform). The instruction sets and subroutines of transcription and translation processes 100c1, 100c2, 100c3, 100c4, which could be stored on storage devices 308, 310, 312, 314 (respectively) coupled to client electronic devices 316, 318, 320, 322 (respectively), could be executed by one or more processors (not shown) and one or more memory architectures (not shown) incorporated into client electronic devices 316, 318, 320, 322 (respectively). Examples of storage devices 308, 310, 312, 314 could include but are not limited to: hard disk drives; RAID devices; random access memories (RAM); read-only memories (ROM), and all forms of flash memory storage devices.

Examples of client electronic devices 316, 318, 320, 322 could include, but are not limited to a personal digital assistant (not shown), a tablet computer (not shown), laptop computer 316, smart phone 318, smart phone 320, personal computer 322, a notebook computer (not shown), a server computer (not shown), a gaming console (not shown), and a dedicated network device (not shown). Client electronic devices 316, 318, 320, 322 could each execute an operating system, examples of which could include but are not limited to Microsoft Windows , Android , iOS , Linux , or a custom operating system.

Users 324, 326, 328, 330 could access transcription and translation process 100 directly through network 302 or through secondary network 306. Further, transcription and translation process 10 could be connected to network 302 through secondary network 306, as illustrated with link line 332.

The various client electronic devices (e.g., client electronic devices 316, 318, 320, 322) could be directly or indirectly coupled to network 302 (or network 306). For example, laptop computer 316 and smart phone 318 are shown wirelessly coupled to network 302 via wireless communication channels 334, 336 (respectively) established between laptop computer 316, smart phone 318 (respectively) and cellular network / bridge 338, which is shown directly coupled to network 302.

Further, smart phone 320 is shown wirelessly coupled to network 302 via wireless communication channel 340 established between smart phone 320 and wireless access point (i.e., WAP) 342, which is shown directly coupled to network 302. Additionally, personal computer 322 is shown directly coupled to network 306 via a hardwired network connection.

WAP 342 could be, for example, an IEEE 802.11a, 802.11b, 802.11g, 802.11n, Wi-Fi, or Bluetooth device that is capable of establishing wireless communication channel 340 between smart phone 320 and WAP 342. As is known in the art, IEEE 802.11x specifications could use Ethernet protocol and carrier sense multiple access with collision avoidance (i.e., CSMA/CA) for path sharing. As is known in the art, Bluetooth is a telecommunications industry specification that allows e.g., mobile phones, computers, and personal digital assistants to be interconnected using a short-range wireless connection.

The disclosure presented herein also encompasses the subject matter set forth in the following clauses.

Example Clause A1. A computer-implemented method, executed on a computing device, comprising: receiving speech in a source language to define source language speech; performing a first token-based transcription of the source language speech into text of the source language using a first look-ahead encoder to define source language text; and performing a first token-based translation of the source language speech into text of a target language using a second look-ahead encoder to define target language text; wherein the first look-ahead encoder is smaller than the second look- ahead encoder.

Example Clause A2. The computer-implemented method of clause A1 wherein performing a first token-based transcription of the source language speech into text of the source language using a first look-ahead encoder includes: utilizing a first neural network model to effectuate the first token-based transcription of the source language speech into text of the source language.

Example Clause A3. The computer-implemented method of clause A2 wherein the first neural network model is a Recurrent Neural Network Transducer (RNN-T) model.

Example Clause A4. The computer-implemented method of clause A2 or clause A3 wherein the first token-based transcription utilizes time-based tokens to transcribe the source language speech into text of the source language.

Example Clause A5. The computer-implemented method of clauses A1 to A4 wherein performing a first token-based translation of the source language speech into text of a target language using a second look-ahead encoder includes: utilizing a second neural network model to effectuate the first token- based translation of the source language speech into text of the target language.

Example Clause A6. The computer-implemented method of clause A5 wherein the second neural network model is a Recurrent Neural Network Transducer (RNN-T) model.

Example Clause A7. The computer-implemented method of clause A5 or clause A6 wherein the first token-based translation utilizes time-based tokens to translate the source language speech into text of the target language.

Example Clause A8. The computer-implemented method of clauses A1 to A7 wherein utilizing a second look- ahead encoder when performing the first token-based translation of the source language speech into text of the target language enables the gathering of more understanding concerning the use and meaning of the source language speech.

Example Clause A9. The computer-implemented method of clauses A1 to A8 further comprising: utilizing a shared look-ahead buffer for both the first token-based transcription and the first token-based translation.

Example Clause A10. The computer-implemented method of clauses A1 to A9 herein the target language is English.

Example Clause B1. A computer program product residing on a computer readable medium having a plurality of instructions stored thereon which, when executed by a processor, cause the processor to perform operations comprising: receiving speech in a source language to define source language speech; performing a first token-based transcription of the source language speech into text of the source language using a first look-ahead encoder to define source language text; and performing a first token-based translation of the source language speech into text of a target language using a second look-ahead encoder to define target language text; wherein performing a first token-based transcription of the source language speech into text of the source language using a first look-ahead encoder includes: utilizing a first neural network model to effectuate the first token-based transcription of the source language speech into text of the source language; wherein the first look-ahead encoder is smaller than the second look- ahead encoder.

Example Clause B2. The computer program product of clause B1 wherein the first neural network model is a Recurrent Neural Network Transducer (RNN-T) model.

Example Clause B3. The computer program product of clause B1 or B2 wherein performing a first token- based translation of the source language speech into text of a target language using a second look-ahead encoder includes: utilizing a second neural network model to effectuate the first token- based translation of the source language speech into text of the target language.

Example Clause B4. The computer program product of clause B3 wherein the second neural network model is a Recurrent Neural Network Transducer (RNN-T) model.

Example Clause B5. The computer program product of clauses B1 to B4 wherein utilizing a second look- ahead encoder when performing the first token-based translation of the source language speech into text of the target language enables the gathering of more understanding concerning the use and meaning of the source language speech.

Example Clause C1. A computing system including a processor and memory configured to perform operations comprising: receiving speech in a source language to define source language speech; performing a first token-based transcription of the source language speech into text of the source language using a first look-ahead encoder to define source language text; and performing a first token-based translation of the source language speech into text of a target language using a second look-ahead encoder to define target language text; wherein performing a first token-based translation of the source language speech into text of a target language using a second look-ahead encoder includes: utilizing a second neural network model to effectuate the first token-based translation of the source language speech into text of the target language; wherein the first look-ahead encoder is smaller than the second look- ahead encoder.

Example Clause C2. The computing system of clause C1 wherein the second neural network model is a Recurrent Neural Network Transducer (RNN-T) model.

Example Clause C3. The computing system of clause C1 or C2 wherein performing a first token-based transcription of the source language speech into text of the source language using a first look-ahead encoder includes: utilizing a first neural network model to effectuate the first token-based transcription of the source language speech into text of the source language.

Example Clause C4. The computing system of clause C3 wherein the first neural network model is a Recurrent Neural Network Transducer (RNN-T) model.

Example Clause C5. The computing system of clause C1 to C4 wherein utilizing a second look-ahead encoder when performing the first token-based translation of the source language speech into text of the target language enables the gathering of more understanding concerning the use and meaning of the source language speech.

Example Clause D1. A computer-implemented method, computer program product and computing system for: receiving speech in a source language to define source language speech; performing a first token-based transcription of the source language speech into text of the source language using a first look-ahead encoder to define source language text; and performing a first token-based translation of the source language speech into text of a target language using a second look-ahead encoder to define target language text, wherein the first look-ahead encoder is smaller than the second look-ahead encoder.

### General:

As will be appreciated by one skilled in the art, the present disclosure could be embodied as a method, a system, or a computer program product. Accordingly, the present disclosure could take the form of an entirely hardware embodiment, an entirely software embodiment (including firmware, resident software, micro-code, etc.) or an embodiment combining software and hardware aspects that could all generally be referred to herein as a "circuit," "module" or "system." Furthermore, the present disclosure could take the form of a computer program product on a computer-usable storage medium having computer-usable program code embodied in the medium.

Any suitable computer usable or computer readable medium could be used. The computer-usable or computer-readable medium could be, for example but not limited to, an electronic, magnetic, optical, electromagnetic, infrared, or semiconductor system, apparatus, device, or propagation medium. More specific examples (a non-exhaustive list) of the computer-readable medium could include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. The computer-usable or computer-readable medium could also be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium could be any medium that can contain, store, communicate, propagate, or transport the program for use by or in connection with the instruction execution system, apparatus, or device. The computer-usable medium could include a propagated data signal with the computer-usable program code embodied therewith, either in baseband or as part of a carrier wave. The computer usable program code could be transmitted using any appropriate medium, including but not limited to the Internet, wireline, optical fiber cable, RF, etc.

Computer program code for carrying out operations of the present disclosure could be written in an object-oriented programming language. However, the computer program code for carrying out operations of the present disclosure could also be written in conventional procedural programming languages, such as the "C" programming language or similar programming languages. The program code could execute entirely on the user's computer, partly on the user's computer, as a stand-alone software package, partly on the user's computer and partly on a remote computer or entirely on the remote computer or server. In the latter scenario, the remote computer could be connected to the user's computer through a local area network / a wide area network / the Internet.

The present disclosure is described with reference to flowchart illustrations and block diagrams of methods, apparatus (systems) and computer program products according to embodiments of the disclosure. It will be understood that each block of the flowchart illustrations and block diagrams, and combinations of blocks in the flowchart illustrations and block diagrams, could be implemented by computer program instructions. These computer program instructions could be provided to a processor of a general-purpose computer / special purpose computer / other programmable data processing apparatus, such that the instructions, which execute via the processor of the computer or other programmable data processing apparatus, create means for implementing the functions/acts specified in the flowchart and block diagram block or blocks.

These computer program instructions could also be stored in a computer-readable memory that could direct a computer or other programmable data processing apparatus to function in a particular manner, such that the instructions stored in the computer-readable memory produce an article of manufacture including instruction means which implement the function/act specified in the flowchart and block diagram block or blocks.

The computer program instructions could also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and block diagram block or blocks.

The flowcharts and block diagrams in the figures could illustrate the architecture, functionality, and operation of possible implementations of systems, methods and computer program products according to various embodiments of the present disclosure. In this regard, each block in the flowchart or block diagrams could represent a module, segment, or portion of code, which comprises one or more executable instructions for implementing the specified logical function(s). It should also be noted that, in some alternative implementations, the functions noted in the block could occur out of the order noted in the figures. For example, two blocks shown in succession may, in fact, be executed substantially concurrently, or the blocks could sometimes be executed in the reverse order, not at all, or in any combination with any other flowcharts depending upon the functionality involved. It will also be noted that each block of the block diagrams and flowchart illustrations, and combinations of blocks in the block diagrams and flowchart illustrations, could be implemented by special purpose hardware-based systems that perform the specified functions or acts, or combinations of special purpose hardware and computer instructions.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and "comprising," when used in this specification, specify the presence of stated features, integers, steps, operations, elements, and components, but do not preclude the presence or addition of one or more other features, integers, steps, operations, elements, components, and groups thereof.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. Many modifications and variations will be apparent to those of ordinary skill in the art without departing from the scope of the disclosure. The embodiment was chosen and described in order to best explain the principles of the disclosure and the practical application, and to enable others of ordinary skill in the art to understand the disclosure for various embodiments with various modifications as are suited to the particular use contemplated.

A number of implementations have been described. Having thus described the disclosure of the present application in detail and by reference to embodiments thereof, it will be apparent that modifications and variations are possible without departing from the scope of the disclosure defined in the appended claims.

## Claims

1. A computer-implemented method, executed on a computing device, comprising:
receiving (150) speech in a source language to define source language speech;
performing (152) a first token-based transcription of the source language speech into text of the source language using a first look-ahead encoder to define source language text; and
performing (156) a first token-based translation of the source language speech into text of a target language using a second look-ahead encoder to define target language text;
wherein the first look-ahead encoder is smaller than the second look-ahead encoder.

2. The computer-implemented method of claim 1 wherein performing a first token-based transcription of the source language speech into text of the source language using a first look-ahead encoder includes:
utilizing (154) a first neural network model to effectuate the first token-based transcription of the source language speech into text of the source language.

3. The computer-implemented method of claim 2 wherein the first neural network model is a Recurrent Neural Network Transducer (RNN-T) model.

4. The computer-implemented method of claim 1 or claim 2 wherein the first token-based transcription utilizes time-based tokens to transcribe the source language speech into text of the source language.

5. The computer-implemented method of any one of claims 1 to 4 wherein performing a first token-based translation of the source language speech into text of a target language using a second look-ahead encoder includes:
utilizing (158) a second neural network model to effectuate the first token-based translation of the source language speech into text of the target language.

6. The computer-implemented method of claim 5 wherein the second neural network model is a Recurrent Neural Network Transducer (RNN-T) model.

7. The computer-implemented method of claim 5 or claim 6 wherein the first token-based translation utilizes time-based tokens to translate the source language speech into text of the target language.

8. The computer-implemented method of any one of claims 1 to 7 wherein utilizing a second look-ahead encoder when performing the first token-based translation of the source language speech into text of the target language enables the gathering of more understanding concerning the use and meaning of the source language speech.

9. The computer-implemented method of any one of claims 1 to 8 further comprising:
utilizing (160) a shared look-ahead buffer for both the first token-based transcription and the first token-based translation.

10. The computer-implemented method of any one of claims 1 to 9 wherein the target language is English.

11. A computer program product residing on a computer readable medium having a plurality of instructions stored thereon which, when executed by a processor, cause the processor to perform operations comprising:
receiving (150) speech in a source language to define source language speech;
performing (152) a first token-based transcription of the source language speech into text of the source language using a first look-ahead encoder to define source language text; and
performing (156) a first token-based translation of the source language speech into text of a target language using a second look-ahead encoder to define target language text;
wherein performing a first token-based transcription of the source language speech into text of the source language using a first look-ahead encoder includes: utilizing (154) a first neural network model to effectuate the first token-based transcription of the source language speech into text of the source language;
wherein the first look-ahead encoder is smaller than the second look-ahead encoder.

12. The computer program product of claim 11 wherein the first neural network model is a Recurrent Neural Network Transducer (RNN-T) model.

13. The computer program product of claim 11 or claim 12 wherein performing a first token-based translation of the source language speech into text of a target language using a second look-ahead encoder includes:
utilizing (158) a second neural network model to effectuate the first token-based translation of the source language speech into text of the target language.

14. The computer program product of claim 13 wherein the second neural network model is a Recurrent Neural Network Transducer (RNN-T) model.

15. The computer program product of any one of claims 11 to 14 wherein utilizing a second look-ahead encoder when performing the first token-based translation of the source language speech into text of the target language enables the gathering of more understanding concerning the use and meaning of the source language speech.
